# EUROPEAN PATENT APPLICATION

(11) **EP 3 073 500 A1**
(43) Date of publication of application: **28.09.2016**
(21) Application number: 14863468.6
(22) Date of filing: 24.10.2014
(51) Int. Cl.: H01G 11/50, H01G 11/06, H01G 11/52, H01G 11/70, H01G 11/84

(54) **CAPACITOR AND METHOD FOR MANUFACTURING SAME**

(30) Priority: 19.11.2013 JP 2013239093
(71) Applicant: Sumitomo Electric Industries, Ltd., Osaka-shi, Osaka 541-0041 (JP)
(72) Inventor: OKUNO, Kazuki, Itami-shi, Hyogo 664-0016 (JP); MAJIMA, Masatoshi, Itami-shi, Hyogo 664-0016 (JP); UEDA, Mitsuyasu, Itami-shi, Hyogo 664-0016 (JP)
(74) Representative: Boult Wade Tennant
(86) International application number: PCT/JP2014/078331
(87) International publication number: WO 2015/076059

(57) **Abstract**

A capacitor includes an electrode group that includes a positive electrode including a positive electrode active material and a porous positive electrode current collector that holds the positive electrode active material, a negative electrode including a negative electrode active material and a porous negative electrode current collector that holds the negative electrode active material, and a first separator disposed between the positive electrode and the negative electrode; a nonaqueous electrolyte having alkali metal ion conductivity; a case that hermetically seals the electrode group and the nonaqueous electrolyte; an alkali metal supply source disposed between the electrode group and the case; and a second separator disposed between the electrode group and the alkali metal supply source. At least the negative electrode contains an alkali metal introduced by pre-doping using the alkali metal supply source. The second separator has a thickness of 5 to 60 µm. The negative electrode current collector includes a first metal porous body having a three-dimensional mesh-like structure.

## Description

### Technical Field

The present invention relates to a capacitor including an electrode group in which at least a negative electrode is pre-doped with an alkali metal.

### Background Art

With an increased awareness of environmental problems, system that convert clean energy such as sunlight and wind power into electric power and store the electrical power as electrical energy have been actively developed. Examples of such known electricity storage devices include nonaqueous electrolyte secondary batteries such as lithium ion secondary batteries (LIB), and electric double-layer capacitors (EDLC). However, lithium ion secondary batteries have a limited capability of being charged and discharged with high-capacity electric power in a short time. Electric double-layer capacitors have a limitation in the amount of electricity that can be stored. In view of this, in recent years, lithium ion capacitors have attracted attention as large-capacity electricity storage devices that combine advantages of lithium ion secondary batteries and electric double-layer capacitors.

In order to sufficiently exhibit the performance of a lithium ion capacitor, at least one of a positive electrode active material and a negative electrode active material needs to be pre-doped with lithium. For example, in the case where activated carbon is used as the positive electrode active material and hard carbon is used as the negative electrode active material, a positive electrode and a negative electrode do not originally contain lithium. Therefore, unless lithium is added, ion species that contribute to a charge transfer becomes insufficient. This is the reason why the pre-doping is performed. Furthermore, in order to obtain a high-voltage lithium ion capacitor, it is desirable that a negative electrode be pre-doped with lithium in advance to decrease negative electrode potential. Similarly, in the field of nonaqueous electrolyte batteries, it has been proposed that a positive electrode or a negative electrode is pre-doped with lithium in order to obtain a high-capacity battery.

In the fields of lithium ion capacitors and LIB, a lithium supply source is prepared, the lithium supply source is electrically connected to a negative electrode, and the negative electrode is electrochemically pre-doped with lithium (for example, PTL 1).

### Citation List

### Patent Literature

PTL 1: Japanese Unexamined Patent Application Publication No. 2009-59732

### Summary of Invention

### Technical Problem

In a pre-doping step, when the distance between an alkali metal supply source and an electrode group is small, an alkali metal may precipitate on a surface of a negative electrode that is the closest to the alkali metal supply source. Precipitation of an alkali metal may cause a short-circuit and thus is not preferable. In view of this, in PTL 1, two separators are arranged so that a gap between an alkali metal supply source and a negative electrode or a positive electrode adjacent to the alkali metal supply source becomes 40 to 120 µm, thereby keeping the physical distance. However, with an increase in the physical distance, pre-doping requires a long time, and the distribution of a doping alkali metal tends to be nonuniform in a thickness direction of the negative electrode. Solution to Problem

An aspect of the present invention relates to a capacitor including an electrode group that includes a positive electrode including a positive electrode active material and a porous positive electrode current collector that holds the positive electrode active material, a negative electrode including a negative electrode active material and a porous negative electrode current collector that holds the negative electrode active material, and a first separator disposed between the positive electrode and the negative electrode; a nonaqueous electrolyte having alkali metal ion conductivity; a case that hermetically seals the electrode group and the nonaqueous electrolyte; an alkali metal supply source disposed between the electrode group and the case; and a second separator disposed between the electrode group and the alkali metal supply source, in which at least the negative electrode contains an alkali metal introduced by pre-doping using the alkali metal supply source, the second separator has a thickness of 5 to 60 µm, and the negative electrode current collector includes a first metal porous body having a three-dimensional mesh-like structure.

Another aspect of the present invention relates to a method for producing a capacitor, the method including a step of preparing an electrode group that includes a positive electrode including a positive electrode active material and a porous positive electrode current collector that holds the positive electrode active material, a negative electrode including a negative electrode active material and a porous negative electrode current collector that holds the negative electrode active material, and a first separator disposed between the positive electrode and the negative electrode; a step of preparing an alkali metal supply source; a step of housing the alkali metal supply source, the electrode group, and a second separator in a case so that the alkali metal supply source is disposed between the electrode group and the case and faces the electrode group with the second separator therebetween; a step of electrically connecting the negative electrode to the alkali metal supply source; a step of pre-doping at least the negative electrode with an alkali metal supported on the alkali metal supply source by pouring a nonaqueous electrolyte having alkali metal ion conductivity into the case; and a step of hermetically sealing the case, in which the second separator has a thickness of 5 to 60 µm, and the negative electrode current collector includes a first metal porous body having a three-dimensional mesh-like structure.

### Advantageous Effects of Invention

According to the present invention, it is possible to provide a capacitor in which a negative electrode can be uniformly pre-doped with an alkali metal in a short time and generation of a dendrite is suppressed.

### Brief Description of Drawings

[Fig. 1] Figure 1 is a longitudinal sectional view illustrating a structure of a cell of a lithium ion capacitor according to an embodiment of the present invention.
[Fig. 2] Figure 2 is a schematic view illustrating a structural example of a part of a skeleton of a first metal porous body.
[Fig. 3] Figure 3 is a schematic sectional view illustrating a state in which a first metal porous body is filled with a negative electrode mixture.

### Description of Embodiments

### [Description of Embodiments of Invention]

First, the contents of embodiments of the present invention will be listed and described.

A first aspect of the present invention relates to (1) a capacitor including an electrode group that includes a positive electrode including a positive electrode active material and a porous positive electrode current collector that holds the positive electrode active material, a negative electrode including a negative electrode active material and a porous negative electrode current collector that holds the negative electrode active material, and a first separator disposed between the positive electrode and the negative electrode; a nonaqueous electrolyte having alkali metal ion conductivity; a case that hermetically seals the electrode group and the nonaqueous electrolyte; an alkali metal supply source disposed between the electrode group and the case; and a second separator disposed between the electrode group and the alkali metal supply source, in which at least the negative electrode contains an alkali metal introduced by pre-doping using the alkali metal supply source, the second separator has a thickness of 5 to 60 µm, and the negative electrode current collector includes a first metal porous body having a three-dimensional mesh-like structure. With this structure, the negative electrode can be uniformly pre-doped with an alkali metal in a short time. In addition, generation of a dendrite is suppressed.
(2) The negative electrode may have a thickness of 50 to 600 µm. This is because even when the negative electrode has a thickness in this range, the negative electrode can be uniformly doped with an alkali metal.
(3) The positive electrode current collector preferably includes a second metal porous body having a three-dimensional mesh-like structure. This is because the transfer of alkali metal ions is performed more smoothly.
(4) The first separator preferably has a porosity of 20% to 85%, and the second separator preferably has a porosity of 20% to 85%. This is because the transfer of alkali metal ions is performed still more smoothly.
(5) A ratio of a thickness of the first separator to a total thickness of a pair of the positive electrode and the negative electrode is preferably 10% or less. This is because the time required for pre-doping is further reduced.
(6) In a discharged state of the capacitor, the negative electrode preferably has a potential of 0 to 1 V with respect to an oxidation-reduction potential of the alkali metal. That is, the pre-doping is preferably performed until a potential of the negative electrode reaches 0 to 1 V with respect to an oxidation-reduction potential of the doping alkali metal. This is because a high-voltage capacitor can be obtained.

Another aspect of the present invention relates to (7) a method for producing a capacitor, the method including a step of preparing an electrode group that includes a positive electrode including a positive electrode active material and a porous positive electrode current collector that holds the positive electrode active material, a negative electrode including a negative electrode active material and a porous negative electrode current collector that holds the negative electrode active material, and a first separator disposed between the positive electrode and the negative electrode; a step of preparing an alkali metal supply source that supports an alkali metal; a step of housing the alkali metal supply source, the electrode group, and a second separator in a case so that the alkali metal supply source is disposed between the electrode group and the case and faces the electrode group with the second separator therebetween; a step of electrically connecting the negative electrode to the alkali metal supply source; a step of pre-doping at least the negative electrode with the alkali metal supported on the alkali metal supply source by pouring a nonaqueous electrolyte having alkali metal ion conductivity into the case; and a step of hermetically sealing the case, in which the second separator has a thickness of 5 to 60 µm, and the negative electrode current collector includes a first metal porous body having a three-dimensional mesh-like structure. With this method, the negative electrode can be uniformly pre-doped with an alkali metal in a short time. In addition, generation of a dendrite is suppressed.

### [Details of Embodiment of Invention]

An embodiment of the present invention will be specifically described below. The scope of the present invention is not limited to the content described below but is defined by the claims described below. It is intended that the scope of the present invention includes equivalents of the claims and all modifications within the scope of the claims.

### [Second separator]

The second separator is disposed between an alkali metal supply source and an electrode group and has a thickness of 5 to 60 µm. The thickness of the second separator is preferably 5 to 40 µm, and more preferably 5 to 35 µm. When the thickness of the second separator exceeds 60 µm, it takes a long time to perform pre-doping, and doping may be performed nonuniformly. When the thickness of the second separator is less than 5 µm, a dendrite tends to be generated.

Since the thickness of the second separator is 5 to 60 µm, the physical distance between the alkali metal supply source and the electrode group is relatively small. However, in the case where a negative electrode current collector includes a first metal porous body, an alkali metal ion has high diffusibility. Therefore, when the thickness of the second separator is in this range, generation of a dendrite is suppressed. Furthermore, the negative electrode can be uniformly pre-doped with an alkali metal.

In the case where the first metal porous body does not have a three-dimensional mesh-like structure, the thickness of the second separator is preferably more than 40 µm in order to suppress the generation of a dendrite. However, when the thickness of the second separator is more than 40 µm, there may be a problem in that doping tends to be nonuniform. It is believed that this is because a potential distribution is formed in a thickness direction of the negative electrode. With an increase in the distance between the alkali metal supply source and the negative electrode, doping tends to be more nonuniform.

In contrast, in the case where the first metal porous body has a three-dimensional mesh-like structure, an alkali metal ion to be doped can easily move through the inside of the negative electrode. Consequently, not only a surface of the negative electrode but also the whole negative electrode is rapidly doped with the alkali metal ion. In addition, a potential distribution is not readily formed in the thickness direction of the negative electrode. Therefore, even when the thickness of the second separator is 40 µm or less, the generation of a dendrite can be suppressed as long as the thickness of the second separator is 5 µm or more. Furthermore, even when the thickness of the second separator is 40 µm or more, doping with an alkali metal can be uniformly performed as long as the thickness of the second separator is 60 µm or less. A separator having a thickness of 5 to 60 µm may be used alone as the second separator. Alternatively, a plurality of separators may be stacked so as to have a thickness of 5 to 60 µm and may be used as the second separator. Of these, a separator having a predetermined thickness is preferably used alone from the viewpoint that doping is performed uniformly.

The second separator has a porous material structure and holds a nonaqueous electrolyte in pores thereof, thereby allowing ions to permeate. The second separator preferably has a porosity of 20% to 85%. When the porosity is in this range, the transfer of alkali metal ions is performed more smoothly. Consequently, the time required for pre-doping is further reduced, and doping is performed more uniformly.

Examples of the material of the second separator that can be used include polyolefins such as polyethylene and polypropylene; polyesters such as polyethylene terephthalate; polyamides; polyimides, cellulose; and glass fibers. An average pore diameter of the second separator is not particularly limited but is, for example, about 0.01 to 5 µm.

### [Negative electrode]

The negative electrode includes a porous negative electrode current collector and a negative electrode active material. In addition, the negative electrode may contain, as an optional component, a conductive aid, a binder, etc.

The porous negative electrode current collector is a first metal porous body having a three-dimensional mesh-like structure. Herein, the term "three-dimensional mesh-like structure" refers to a structure in which rod-like or fiber-like metals that constitute a porous body are three-dimensionally connected to each other to form a network. Examples thereof include a sponge-like structure and a nonwoven fabric structure. Specific structures thereof will be described below. Since the first metal porous body has interconnected pores communicating each other, the transfer of alkali metal ions is not hindered. The three-dimensional mesh-like skeleton preferably has a cavity therein (that is, is hollow).

The porosity of the first metal porous body is preferably 50% or more, and more preferably 80% or more and 98% or less. When the porosity is in this range, the transfer of alkali metal ions is performed more smoothly. Note that, in substantially two-dimensional structures such as an expanded metal, a punched screen, a punched metal, and a lath board, the processing is limited in a state of porosity of 30% or less in view of strength, etc. The porosity is a numerical value obtained by converting a ratio {1 - (mass of porous body/true specific gravity of porous body)/(apparent volume of porous body)} into a percentage (%).

A metal which is a material of the first metal porous body is not particularly limited as long as the metal does not form an alloy with an alkali metal. When the alkali metal is lithium, examples of the material include copper, copper alloys, nickel, and nickel alloys. When the alkali metal is sodium, examples of the material include aluminum and aluminum alloys. The copper alloys preferably contain less than 50% by mass of an element other than copper. The nickel alloys preferably contain less than 50% by mass of an element other than nickel. As a commercially available first metal porous body, it is possible to use a copper or nickel "Celmet" (registered trademark) manufactured by Sumitomo Electric Industries, Ltd., the Celmet being a copper porous body (porous body containing copper or a copper alloy) or a nickel porous body (porous body containing nickel or a nickel alloy).

The first metal porous body can be formed by, for example, coating a resin porous body having continuous pores with the metal described above. The metal coating can be performed by, for example, a plating process, a gas-phase method (such as vapor deposition, plasma-enhanced chemical vapor deposition, or sputtering), or an application of a metal paste. A three-dimensional mesh-like skeleton is formed by the metal coating process. Among these coating methods, the plating process is preferable.

The plating process is not particularly limited as long as a metal layer can be formed on surfaces (also including surfaces in continuous pores) of a resin porous body. Known plating process methods such as an electrolytic plating method and a molten-salt plating method can be employed. A first metal porous body having a three-dimensional mesh-like structure conforming to the shape of the resin porous body is formed by the plating process. When the plating process is performed by the electrolytic plating method, a conductive layer is preferably formed prior to electrolytic plating. The conductive layer may be formed on surfaces of a resin porous body by electroless plating, vapor deposition, sputtering, or the like. Alternatively, the conductive layer may be formed by, for example, applying a conductive agent. Alternatively, the conductive layer may be formed by immersing a resin porous body in a dispersion liquid containing a conductive agent.

The resin porous body is not particularly limited as long as the resin porous body has continuous pores, and a resin foam, a resin nonwoven fabric, or the like may be used. A resin constituting any of these porous bodies is preferably a resin in which, after a metal coating process, the inner part of the skeleton can be made to be hollow by decomposition, dissolution, or the like while maintaining the shape of the three-dimensional mesh-like skeleton formed of a metal. Preferably, the resin in the skeleton is decomposed or dissolved by a heat treatment or the like and removed. After the metal coating process, as a result of the removal of the inner resin, cavities are formed inside the skeleton of a metal porous body, and thus a hollow structure is formed.

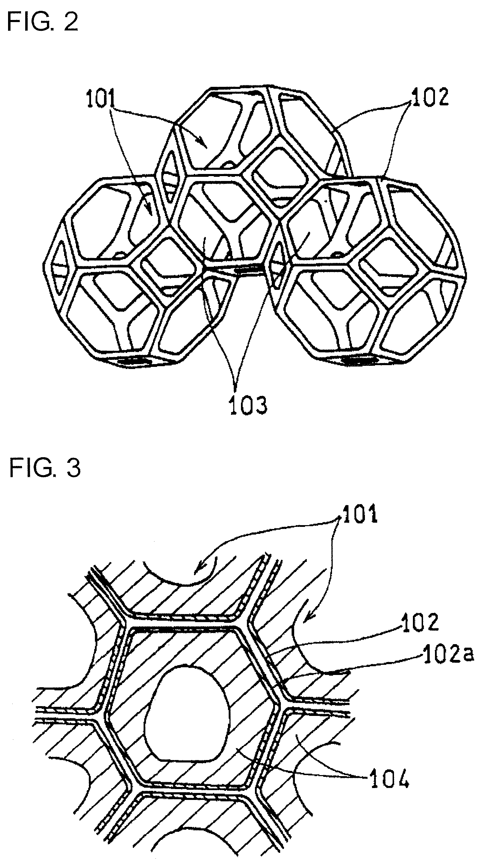

The first metal porous body obtained as described above has a skeleton having a three-dimensional mesh-like structure conforming to the shape of the resin foam. Figure 2 is a schematic view of a skeleton of a first metal porous body. Specifically, the first metal porous body has a plurality of cell-like voids 101 surrounded by a metal skeleton 102, and substantially polygonal openings (or windows) 103 are formed between voids 101 adjacent to each other. The term "substantially polygonal" used herein refers to polygons and shapes similar to a polygon (for example, a polygon having a rounded corner, a polygon having a curved side, and the like). Adjacent voids 101 are communicated with one another through the openings 103 to form interconnected pores. As a result of the removal of the inner resin, a cavity 102a (refer to Fig. 3) is formed in the inner part of the skeleton.

The first metal porous body has a very high porosity and has a large specific surface area. The specific surface area (Brunauer-Emmett-Teller (BET) specific surface area) of the first metal porous body is, for example, 100 to 700 cm²/g, preferably 150 to 650 cm²/g, and still more preferably 200 to 600 cm²/g.

The negative electrode is formed by filling the negative electrode current collector including the first metal porous body with a negative electrode mixture containing a negative electrode active material. Figure 3 is a schematic sectional view illustrating a state in which spaces of the first metal porous body in Fig. 2 are filled with a negative electrode mixture. The cell-like voids 101 are filled with a negative electrode mixture 104. The negative electrode mixture 104 adheres to the surfaces of the metal skeleton 102 to form a negative electrode mixture layer.

The negative electrode preferably has a thickness of 50 to 600 µm. Even when the thickness of the negative electrode is in this range, a potential difference in the negative electrode is unlikely to occur, and pre-doping with an alkali metal is uniformly performed. This is because the first metal porous body included in the negative electrode current collector has a three-dimensional mesh-like skeleton. Specifically, this is because an electrolyte can uniformly permeate through the entire negative electrode including the inner portion thereof, and an alkali metal ion can also smoothly move through the inner portion of the negative electrode. The negative electrode more preferably has a thickness of 50 to 400 µm. The negative electrode preferably has a porosity of 10% to 50%.

In capacitors, a negative electrode active material performs a transfer of an electron with an alkali metal ion (Faradaic reaction). Therefore, the negative electrode active material contains a material that occludes and releases (or intercalates and deintercalates) an alkali metal ion. Examples of such a material include not only carbon materials but also lithium titanium oxides (such as spinel lithium titanium oxide, e.g., lithium titanate), alloy-based active materials, and sodium-containing titanium compounds (such as spinel sodium titanium oxide, e.g., sodium titanate). Examples of the carbon materials include graphitizable carbon (soft carbon), non-graphitizable carbon (hard carbon), and graphite. The term "alloy-based active material" refers to an active material containing an element that forms an alloy with an alkali metal. Examples thereof include silicon oxides, silicon alloys, tin oxides, and tin alloys. The negative electrode active materials may be used alone or in combination of two or more materials. Among the negative electrode active materials, carbon materials are preferable, and in particular, graphite and/or hard carbon is preferable.

Example of graphite include natural graphite (such as flake-like graphite), artificial graphite, and graphitized mesocarbon microbeads. Graphite has a layer structure in which planar six-membered rings of carbon atoms are two-dimensionally connected to one another and has a hexagonal crystal structure. Alkali metal ions can easily move between layers of graphite and reversibly intercalate and deintercalate in graphite.

The term "hard carbon" refers to a carbon material in which a graphite structure is not developed even when the material is heated in an inert atmosphere, and in which minute graphite crystals are arranged in random directions, and there are nanometer-order spaces between crystal layers. An average particle diameter of hard carbon may be, for example, 3 to 20 µm and is preferably 5 to 15 µm from the viewpoint of improving a filling property of a negative electrode active material in the negative electrode and suppressing a side reaction with an electrolyte (molten salt).

Examples of the conductive aid incorporated in the negative electrode include graphite, carbon black, and carbon fibers. Among these, carbon black is preferable from the viewpoint that a sufficient conductive path can be easily formed by use of a small amount. Examples of carbon black include acetylene black, Ketjenblack, and thermal black. The amount of the conductive aid is preferably 2 to 15 parts by mass, and more preferably 3 to 8 parts by mass per 100 parts by mass of the negative electrode active material.

The binder has a function of binding negative electrode active materials to one another and fixing the negative electrode active materials to the negative electrode current collector. Examples of the binder that can be used include fluororesins, polyamides, polyimides, and polyamide-imides. Examples of the fluororesins that can be used include polyvinylidene fluoride (PVDF), polytetrafluoroethylene (PTFE), tetrafluoroethylene-hexafluoropropylene copolymers, and vinylidene fluoride-hexafluoropropylene copolymers. The amount of the binder is preferably 1 to 10 parts by mass, and more preferably 3 to 5 parts by mass per 100 parts by mass of the negative electrode active material.

The negative electrode is obtained by, for example, coating or filling a negative electrode current collector with a negative electrode mixture slurry containing a negative electrode active material, subsequently removing a dispersion medium contained in the negative electrode mixture slurry, and, as required, compressing (or rolling) the current collector that holds the negative electrode active material. Alternatively, a negative electrode active material film may be deposited on a surface of a negative electrode current collector by a gas-phase method such as vapor deposition or sputtering, and the resulting product may be used as the negative electrode.

In order to decrease negative electrode potential, the negative electrode active material is preferably pre-doped with an alkali metal. Consequently, the voltage of the resulting capacitor increases, and the realization of a high capacity is more advantageously performed. In order to suppress precipitation of an alkali metal, the negative electrode capacity is preferably larger than the positive electrode capacity.

After the pre-doping, the potential of the negative electrode in a discharged state is preferably 0 to 1 V with respect to the oxidation-reduction potential of the doping alkali metal. In other words, pre-doping is preferably performed until the potential of the negative electrode reaches 0 to 1 V with respect to the oxidation-reduction potential of the doping alkali metal.
By controlling the potential of the negative electrode in a discharged state to this range, the voltage of the capacitor can be increased.

The pre-doping of the negative electrode with an alkali metal can be performed by a known method. The pre-doping with an alkali metal may be performed during the assembly of the capacitor. In this embodiment, an alkali metal supply source is housed in a case together with a positive electrode, a negative electrode, and a nonaqueous electrolyte, and the resulting capacitor after assembly is kept warm in a thermostatic chamber at about 45°C. Thus, an alkali metal ion is dissolved from the alkali metal supply source in the nonaqueous electrolyte, and the negative electrode can be pre-doped with the alkali metal ion.

The term "pre-doping" refers to that, before an electricity storage devices is operated, an alkali metal is occluded in advance in a negative electrode and/or positive electrode. Any of the positive electrode and the negative electrode may be pre-doped with an alkali metal. However, in the case where the negative electrode active material is a material that does not originally contain an alkali metal, at least the negative electrode is preferably pre-doped. By pre-doping the negative electrode with an alkali metal, negative electrode potential is decreased. Consequently, the voltage of the capacitor is increased, and the realization of a high capacity can be expected.

### [Capacitor]

The capacitor is not particularly limited. Examples of the capacitor include a lithium ion capacitor and a sodium ion capacitor.

The capacitor can be produced by, for example, a step of preparing an electrode group that includes a positive electrode including a positive electrode active material and a porous positive electrode current collector that holds the positive electrode active material, a negative electrode including a negative electrode active material and a porous negative electrode current collector that holds the negative electrode active material, and a first separator disposed between the positive electrode and the negative electrode; a step of preparing an alkali metal supply source; a step of housing the alkali metal supply source, the electrode group, and a second separator in a case so that the alkali metal supply source is disposed between the electrode group and the case and faces the electrode group with the second separator therebetween; a step of electrically connecting the negative electrode to the alkali metal supply source; a step of pre-doping at least the negative electrode with an alkali metal supported on the alkali metal supply source by pouring a nonaqueous electrolyte having alkali metal ion conductivity into the case; and a step of hermetically sealing the case.

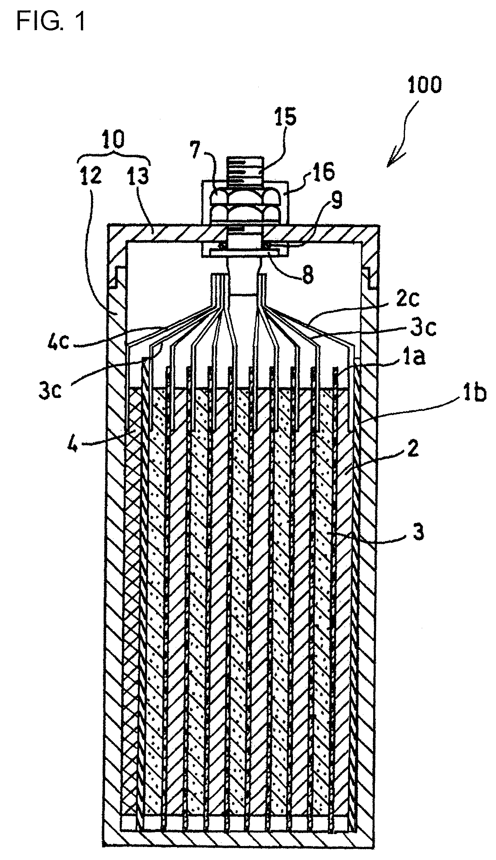

Figure 1 schematically illustrates a structure of a cell of a capacitor according to an embodiment of the present invention.

A capacitor 100 includes a stack-type electrode group, a nonaqueous electrolyte (both of which are not shown), and a rectangular aluminum case 10 which houses these components. The case 10 includes a bottom-closed container body 12 having an opening on the top, and a lid 13 that covers the opening on the top. The electrode group is not limited to the stack-type electrode group, but may be constituted by winding a positive electrode 2 and a negative electrode 3 with a separator 1 therebetween. The case 10 may be formed of, for example, an aluminum laminated sheet.

An alkali metal supply source 4, which is not involved in the storage of electricity, is housed between the electrode group and the case 10 so as to face a negative electrode 3 with a second separator 1b therebetween. In Fig. 1, the second separator 1b is arranged so as to surround the electrode group. However, the form of the second separator 1b is not particularly limited. The alkali metal supply source 4 is connected to the negative electrode 3 through a lead piece 4c so as to have the same potential as the negative electrode 3. Therefore, by pouring the nonaqueous electrolyte, an alkali metal is dissolved in the nonaqueous electrolyte and moves toward the negative electrode 3 in the cell. Consequently, an alkali metal ion is occluded in each negative electrode 3 (more specifically, negative electrode active material), and thus pre-doping with the alkali metal proceeds.

An external positive electrode terminal (not shown) that passes through the lid 13 is provided on the lid 13 at a position close to one side. An external negative electrode terminal 15 that passes through the lid 13 is provided on the lid 13 at a position close to the other side. Each of the terminals is preferably insulated from the case. A safety valve 16 is provided in the center of the lid 13 for the purpose of releasing gas generated inside when the internal pressure of the case 10 increases.

The stack-type electrode group includes a plurality of positive electrodes 2, a plurality of negative electrodes 3, and a plurality of first separators 1a disposed therebetween, each of which has a rectangular sheet shape. In Fig. 1, each of the first separators 1a has a rectangular sheet shape. However, the form of the first separator 1a is not particularly limited. For example, the first separator 1a may be formed like a bag so as to enclose a positive electrode 2. The positive electrodes 2 and the negative electrodes 3 are alternately arranged in the stacking direction in the electrode group.

A positive electrode lead piece 2c may be formed on one end of each of the positive electrodes 2. By bundling the positive electrode lead pieces 2c of the positive electrodes 2 and connecting the bundle to the external positive electrode terminal provided on the lid 13 of the case 10, the positive electrodes 2 are connected in parallel. Similarly, a negative electrode lead piece 3c may be formed on one end of each of the negative electrodes 3. By bundling the negative electrode lead pieces 3c of the negative electrodes 3 and connecting the bundle to the external negative electrode terminal 15 provided on the lid 13 of the case 10, the negative electrodes 3 are connected in parallel. The bundle of the positive electrode lead pieces 2c and the bundle of the negative electrode lead pieces 3c are desirably arranged on the right and left sides of one end face of the electrode group with a distance therebetween so as not to be in contact with each other.

Each of the external positive electrode terminal and the external negative electrode terminal 15 is columnar and is provided with a thread groove on at least a portion exposed to the outside. A nut 7 is fit into the thread groove of each of the terminals. By rotating the nut 7, the nut 7 is fixed to the lid 13. A flange 8 is provided on a portion of each of the terminals to be housed in the case. The flange 8 is fixed to the inner surface of the lid 13 with a washer 9 therebetween by the rotation of the nut 7.

### [Positive electrode]

The positive electrode includes a positive electrode current collector and a positive electrode active material that is held in the positive electrode current collector.

In capacitors, a positive electrode active material does not perform a transfer of an electron with an alkali metal ion but physically adsorbs and desorbs an alkali metal ion (non-Faradaic reaction). Therefore, the positive electrode active material is not particularly limited as long as the material electrochemically adsorbs and desorbs an anion or an alkali metal ion. Among such materials, carbon materials are preferable. Examples of the carbon materials include activated carbon, mesoporous carbon, microporous carbon, and carbon nanotubes. The carbon materials may be subjected to an activation treatment or may not be subjected to an activation treatment. These carbon materials may be used alone or in combination of two or more materials. Among the carbon materials, activated carbon, microporous carbon, etc. are preferable.

An example of the microporous carbon is a microporous carbon obtained by heating a metal carbide such as silicon carbide or titanium carbide in an atmosphere containing chlorine gas.

For example, known activated carbon used in a lithium ion capacitor can be used as the activated carbon. Examples of the raw material of the activated carbon include wood; coconut shells; pulp waste liquid; coal or coal pitch obtained by pyrolysis of coal; heavy oil or petroleum pitch obtained by pyrolysis of heavy oil; and phenolic resins. In general, carbonized materials are subsequently activated. Examples of the activation method include a gas activation method and a chemical activation method.

An average particle diameter (particle diameter D₅₀ at a cumulative volume of 50% in the volume particle size distribution) of the activated carbon is not particularly limited, but is preferably 20 µm or less and more preferably 3 to 10 µm. The specific surface area is also not particularly limited, but is preferably about 800 to 3,000 m²/g. When the specific surface area is in this range, the capacitance of the capacitor can be advantageously increased, and the internal resistance can be reduced.

A porous material is used as the positive electrode current collector. Examples of the porous material include a perforated metal foil having a two-dimensional structure, a nonwoven fabric formed of a metal fiber, and a metal porous sheet. The perforated metal foil includes an expanded metal, a punched screen, a punched metal, a lath board and the like. The perforated metal foil has a thickness of, for example, 10 to 50 µm. The nonwoven fabric formed of a metal fiber or the metal porous sheet has a thickness of, for example, 100 to 600 µm.
Among these, from the viewpoint of a filling property and a holding property of a positive electrode active material and a current collecting property, the positive electrode current collector is preferably a second metal porous body having a three-dimensional mesh-like structure and a hollow skeleton as in the negative electrode current collector.

The second metal porous body is not particularly limited. However, the second metal porous body is preferably an aluminum porous body containing aluminum and an aluminum alloy because such an aluminum porous body is stable at a positive electrode potential. In the case where an aluminum alloy is used, an amount of a metal component (for example, Fe, Si, Ni, Mn, etc.) other than aluminum is preferably 0.5% by mass or less. As a commercially available aluminum porous body, "Aluminum-Celmet" (registered trademark) manufactured by Sumitomo Electric Industries, Ltd. can be used.

The second metal porous body preferably has interconnected pores and has a porosity of 30% or more and 98% or less, and preferably 90% to 98%. The positive electrode current collector may be provided with a lead piece for current collection. The lead piece may be integrally formed with the positive electrode current collector. Alternatively, a lead piece that is separately formed may be connected to the positive electrode current collector by welding or the like.

The positive electrode is obtained by, for example, coating or filling a positive electrode current collector with a positive electrode mixture slurry containing a positive electrode active material, subsequently removing a dispersion medium contained in the positive electrode mixture slurry, and, as required, compressing (or rolling) the current collector that holds the positive electrode active material. The positive electrode mixture slurry may contain a binder, a conductive aid, etc. in addition to the positive electrode active material. The binder and the conductive aid can be appropriately selected from those exemplified in the negative electrode mixture.

### [Alkali metal supply source]

The alkali metal supply source is disposed in a case so as to face an electrode group with a second separator therebetween. That is, the alkali metal supply source is disposed so as to face a negative electrode without a positive electrode therebetween but with a second separator therebetween. It is important that the distance between the negative electrode and the alkali metal supply source be 5 to 60 µm. This distance is regulated by the thickness of the second separator.

The area of an orthographic projection image of the alkali metal supply source viewed from a normal direction of a main surface of the alkali metal supply source is preferably 100% to 120% relative to the area of an orthographic projection image of the negative electrode viewed from a normal direction of a main surface of the negative electrode. When the area of the negative electrode and the area of the alkali metal supply source are substantially the same, the alkali metal supply source is disposed so as to face substantially the entire surface of the negative electrode. Accordingly, the negative electrode can be pre-doped with an alkali metal more uniformly.

The alkali metal supply source is obtained by, for example, supporting an alkali metal on a metal support. Examples of the method for supporting an alkali metal on a metal support include a method in which an alkali metal foil is attached to a surface of a metal support, a method in which an alkali metal is intercalated (occluded) in a hollow portion of a metal support, and a method in which an alkali metal coating film is formed on the skeleton surface of a metal support by a plating process or the like.

The material of the metal support is not particularly limited as long as the material does not form an alloy with an alkali metal.
When the alkali metal is lithium, examples of the material include copper, copper alloys, nickel, and nickel alloys. When the alkali metal is sodium, examples of the material include aluminum and aluminum alloys.

The shape of the metal support is also not particularly limited. Examples of the metal support include two-dimensional structures such as a metal mesh, a metal foil, an expanded metal, a punched screen, a punched metal, and a lath board; and a metal nonwoven fabric and a metal porous body that have a three-dimensional mesh-like structure.

By electrically connecting the alkali metal supply source to the negative electrode, and pouring a nonaqueous electrolyte, an alkali metal ion is dissolved in the nonaqueous electrolyte, and the negative electrode and/or the positive electrode is doped with an alkali metal. The negative electrode is preferably pre-doped with almost all the alkali metal supported on the alkali metal supply source.

The alkali metal ion can be appropriately selected form a lithium ion, a sodium ion, a potassium ion, a rubidium ion, a cesium ion, and the like in accordance with the type of capacitor.

### [First separator]

The first separator has ion permeability and is disposed between a positive electrode and a negative electrode to physically separate the positive electrode and the negative electrode and to prevent a short-circuit. The first separator has a porous material structure and holds a nonaqueous electrolyte in pores thereof, thereby allowing ions to permeate. For example, the materials exemplified in the second separator may be used as the material of the first separator. An average pore diameter of the first separator is not particularly limited and is, for example, substantially the same as that of the second separator.

The thickness of the first separator is 10 to 500 µm, and preferably 20 to 50 µm. In particular, a ratio of the thickness of the first separator to the total thickness of a pair of the positive electrode and the negative electrode is preferably 10% or less. This is because the time required for pre-doping is further reduced. The porosity of the first separator is preferably 20% to 85%, and more preferably 50% to 85%. Controlling the porosity of the first separator in this range is effective to make the transfer of an alkali metal smooth.

### [Nonaqueous electrolyte]

The nonaqueous electrolyte has alkali metal ion conductivity. Examples of the nonaqueous electrolyte used include, besides electrolytes (organic electrolytes) in which a salt (alkali metal salt) of an alkali metal ion and an anion is dissolved in a nonaqueous solvent (or an organic solvent), ionic liquids containing an alkali metal ion and an anion. The concentration of the alkali metal salt in the nonaqueous electrolyte may be, for example, 0.3 to 3 mol/L.

The type of the anion (first anion) forming the alkali metal salt is not particularly limited. Examples of the anion include anions of a fluorine-containing acid [such as anions of a fluorine-containing phosphoric acid, e.g., a hexafluorophosphate ion (PF₆⁻); and anions of a fluorine-containing boric acid, e.g., a tetrafluoroborate ion (BF₄⁻)], anions of a chlorine-containing acid [such as a perchlorate ion (ClO₄⁻)], anions of an oxygen acid having an oxalate group [such as oxalatoborate ions, e.g., a lithium bis(oxalato)borate ion (B(C₂O₄)₂⁻); and oxalatophosphate ions, e.g., a lithium tris(oxalato)phosphate ion (P(C₂O₄)₃⁻)], anions of a fluoroalkane sulfonic acid [such as a trifluoromethane sulfonic acid ion (CF₃SO₃⁻)], and bis(sulfonyl)amide anions. The alkali metal salts may be used alone or in combination of two or more alkali metal salts containing different types of the first anion.

Specific examples of the bis(sulfonyl)amide anions include a bis(fluorosulfonyl)amide anion (FSA⁻), a bis(trifluoromethylsulfonyl)amide anion (TFSA⁻), a bis(pentafluoroethylsulfonyl)amide anion, and a (fluorosulfonyl) (trifluoromethylsulfonyl)amide anion.

The term "ionic liquid" used herein refers to a salt in a molten state (molten salt) and means a liquid having ionic conductivity. In the case where an ionic liquid is used in the nonaqueous electrolyte, the content of the ionic liquid in the nonaqueous electrolyte is preferably 80% by mass or more, and more preferably 90% by mass or more. Furthermore, the nonaqueous electrolyte may contain a nonaqueous solvent, an additive, etc. in addition to an ionic liquid. In the case where an organic electrolyte is used in the nonaqueous electrolyte, the total amount of a nonaqueous solvent and an alkali metal salt in the nonaqueous electrolyte is preferably 80% by mass or more, and more preferably 90% by mass or more of the nonaqueous electrolyte. Furthermore, the nonaqueous electrolyte may contain an ionic liquid, an additive, etc. in addition to an organic electrolyte.

The nonaqueous solvent is not particularly limited, and known nonaqueous solvents used in a lithium ion capacitor can be used. From the viewpoint of ionic conductivity, for example, cyclic carbonates such as ethylene carbonate (EC), propylene carbonate, and butylene carbonate; chain carbonates such as dimethyl carbonate, diethyl carbonate (DEC), and ethyl methyl carbonate; and cyclic carbonic esters such as γ-butyrolactone can be preferably used as the nonaqueous solvents. The nonaqueous solvents may be used alone or in combination of two or more solvents.

The ionic liquid containing an alkali metal ion may further contain a second cation in addition to the alkali metal ion (first cation). As the second cation, inorganic cations other than alkali metals, for example, a magnesium ion, a calcium ion, an ammonium cation, and the like may be used. However, organic cations are preferable. These cations may be used alone or in combination of two or more cations as the second cation.

Examples of the organic cations used as the second cation include not only cations (such as a quaternary ammonium cation) derived from an aliphatic amine, an alicyclic amine, or an aromatic amine but also nitrogen-containing onium cations such as a cation having a nitrogen-containing heterocycle (i.e., a cation derived from a cyclic amine); sulfur-containing onium cations; and phosphorus-containing onium cations.

### [Electrode group]

The capacitor is used in a state in which an electrode group including the positive electrode and the negative electrode, the alkali metal supply source, and the nonaqueous electrolyte are housed in a case. The electrode group is formed by stacking or winding the positive electrode and the negative electrode with the first separator therebetween. In this case, the alkali metal supply source is preferably disposed between the electrode group and the case so as to face the electrode group with the second separator therebetween. In the case where the alkali metal supply source and the negative electrode are electrically connected to each other, for example, a lead piece is formed on the alkali metal supply source and is connected to a lead piece of the negative electrode for current collection. The connection may be established inside the case or outside the case.

The present invention will now be described more specifically using Examples. However, the Examples described below do not limit the present invention.

### «EXAMPLE 1»

A lithium ion capacitor was prepared by the procedure described below.

### (1) Preparation of positive electrode

### (a) Preparation of positive electrode current collector

A thermosetting polyurethane foam (porosity: 95% by volume, number of voids (cells) per inch (= 2.54 cm) of a surface: about 50, 100 mm in length x 30 mm in width x 1.1 mm in thickness) was prepared.

The foam was immersed in a conductive suspension containing graphite, carbon black (average particle diameter D₅₀: 0.5 µm), a resin binder, a penetrant, and an antifoamer, and then dried to form a conductive layer on a surface of the foam. The content of the graphite and the carbon black in the suspension was 25% by mass in total.

The foam having the conductive layer on the surface thereof was immersed in a molten-salt aluminum plating bath, and a direct current having a current density of 3.6 A/dm² was applied for 90 minutes to form an aluminum layer. The mass of the aluminum layer per apparent area of the foam was 150 g/m². The molten-salt aluminum plating bath contained 33% by mole of 1-ethyl-3-methylimidazolium chloride and 67% by mole of aluminum chloride. The temperature of the molten-salt aluminum plating bath was 40°C.

The foam having the aluminum layer on the surface thereof was immersed in a lithium chloride-potassium chloride eutectic molten salt at 500°C, and a negative potential of -1 V was applied for 30 minutes to decompose the foam. The resulting aluminum porous body was taken out from the molten salt, cooled, washed with water, and dried to obtain a positive electrode current collector. The resulting positive electrode current collector had a three-dimensional mesh-like porous structure which conformed to the shape of the voids of the foam and in which the voids are interconnected to each other. The positive electrode current collector had a porosity of 94% by volume, an average void diameter of 550 µm, a specific surface area (BET specific surface area) measured by a BET method of 350 cm²/g, and a thickness of 1,100 µm. The aluminum skeleton having the three-dimensional mesh-like structure had, in the inner part thereof, a cavity formed by the removal of the foam. The positive electrode current collector was obtained in this manner.

### (b) Preparation of positive electrode

An activated carbon powder (specific surface area: 2,300 m²/g, average particle diameter: about 5 µm) serving as a positive electrode active material, acetylene black serving as a conductive aid, PVDF (N-methyl-2-pyrrolidone (NMP) solution containing PVDF in a concentration of 12% by mass) serving as a binder, and NMP serving as a dispersion medium were mixed and stirred in a mixer to prepare a positive electrode mixture slurry. A mass ratio of the respective components in the slurry, the mass ratio being represented by activated carbon:acetylene black:PVDF, was 87:3:10.

The current collector obtained in the step (a) described above was filled with the positive electrode mixture slurry, and drying was performed at 100°C for 30 minutes. The dried product was rolled using a pair of rolls to prepare a positive electrode having a thickness of 740 µm.

### (2) Preparation of negative electrode

### (a) Preparation of negative electrode current collector

A foam having a conductive layer on a surface thereof, the conductive layer being formed by the same method as that used in the positive electrode, was used as a workpiece. The workpiece was immersed in a copper sulfate plating bath, and a direct current having a cathode current density of 2 A/dm² was applied to form a Cu layer on the surface. The mass of the Cu layer per apparent area of the foam was 300 g/m². The copper sulfate plating bath contained 250 g/L of copper sulfate, 50 g/L of sulfuric acid, and 30 g/L of copper chloride. The temperature of the copper sulfate plating bath was 30°C.

The foam having the Cu layer on the surface thereof was heat-treated in an air atmosphere at 700°C to decompose the foam. Subsequently, the resulting product was fired in a hydrogen atmosphere to remove an oxide film formed on the surface. A porous body (negative electrode current collector) formed of copper was thereby obtained. The resulting negative electrode current collector had a three-dimensional mesh-like porous structure which conformed to the shape of the voids of the foam and in which the voids are interconnected to each other. The negative electrode current collector had a porosity of 92% by volume, an average void diameter of 550 µm, a BET specific surface area of 200 cm²/g, and a thickness of 1,100 µm. The copper skeleton having the three-dimensional mesh-like structure had, in the inner part thereof, a cavity formed by the removal of the foam.

### (b) Preparation of negative electrode

An artificial graphite powder serving as a negative electrode active material, acetylene black serving as a conductive aid, PVDF serving as a binder, and NMP serving as a dispersion medium were mixed to prepare a negative electrode mixture slurry. A mass ratio of the graphite powder, acetylene black, and PVDF was 90:5:5.

The current collector obtained in the step (a) described above was filled with the negative electrode mixture slurry, and drying was performed at 100°C for 30 minutes. The dried product was rolled using a pair of rolls to prepare a negative electrode having a thickness of 180 µm and a porosity of 31%.

### (3) Preparation of alkali metal supply source

A lithium foil (thickness: 330 µm, 105 mm x 105 mm) was pressure-bonded to one surface of a punched copper foil (thickness: 20 µm, aperture size: 50 µm, aperture ratio: 50%, 105 mm x 105 mm), and a nickel lead was welded on another surface of the punched copper foil.

### (4) Preparation of separator

A polyolefin separator (average void diameter: 0.1 µm, porosity: 70%) having a thickness of 50 µm was cut to have a size of 110 x 110 mm. Thus, 22 sheets of first separators were prepared.

In addition, a polyolefin separator (average void diameter: 0.1 µm, porosity: 70%) having a thickness of 8 µm was cut to have a length of 110 mm and a width long enough to surround an electrode group. Thus, a second separator was prepared.

### (5) Preparation of lithium ion capacitor

The positive electrode obtained in (1) above was cut into a rectangle having a size of 100 x 100 mm Thus, 10 sheets of positive electrodes were prepared. A lead piece for current collection was formed on a lateral end of a side of each of the positive electrodes. The negative electrode obtained in (2) above was cut into a rectangle having a size of 105 x 105 mm. Thus, 11 sheets of negative electrodes were prepared. A lead piece for current collection was formed on a lateral end of a side of each of the negative electrodes.

Subsequently, the positive electrodes, the negative electrodes, and the first separators were sufficiently dried by heating at a reduced pressure of 0.3 Pa at 90°C or more. Subsequently, the first separators were interposed between the positive electrodes and the negative electrodes. The positive electrodes and the negative electrodes were stacked such that the positive electrode lead pieces overlapped each other, the negative electrode lead pieces overlapped each other, and a bundle of the positive electrode lead pieces and a bundle of the negative electrode lead pieces were symmetrically arranged. Thus, an electrode group was prepared. The second separator was then arranged so as to surround the periphery of the electrode group. Furthermore, the alkali metal supply source was arranged so as to face one of the negative electrodes with the second separator therebetween. The resulting laminate was housed in a case formed of an aluminum laminated sheet.

Subsequently, a nonaqueous electrolyte was poured into the case to penetrate into the positive electrodes, the negative electrodes, and the separators. The nonaqueous electrolyte used was a solution prepared by dissolving LiPF₆ in a mixed solvent of EC and DEC at a volume ratio of 1:1, the solution containing the LiPF₆ in a concentration of 1.0 mol/L. The bundle of the positive electrode lead pieces and the bundle of the negative electrode lead pieces were each integrated and welded to a tab lead. A lead of a third pole was separately led to the outside of the cell. Lastly, the case was sealed with a vacuum sealer while reducing the pressure. The case (including only electrode portions) excluding external terminals had a size of 110 mm x 110 mm x 10.5 mm.

The external terminal of the negative electrode and the lead wire of the alkali metal supply source were connected to a power supply outside the case. The cell in this state was allowed to stand in a thermostatic chamber at 45°C for a predetermined time so that the temperature of the electrolyte reached the same as the temperature of the thermostatic chamber. Next, charging was performed between the negative electrode and the alkali metal supply source with a current of 0.2 mA/cm² up to a potential of 0 V with respect to metallic lithium. Subsequently, discharging of 2.6 mAh/cm² was performed with a current of 0.2 mA/cm² so that lithium ions were released until the potential of the negative electrode reached 0.12 V (vs Li/Li⁺). Thus, pre-doping was completed to prepare a lithium ion capacitor A1. The design capacity of the lithium ion capacitor A1 was about 2,100 mAh at the time of charging of 4.2 V.

The evaluations described below were performed using the lithium ion capacitor.

### «EXAMPLES 2 to 7»

Lithium ion capacitors A2 to A7 were prepared and evaluated as in Example 1 except that a separator having a thickness shown in Table I was used as the second separator.

### «EXAMPLES 8 to 10»

Lithium ion capacitors A8 to A10 were prepared and evaluated as in Example 1 except that a negative electrode having a thickness shown in Table I was used. The amount of the negative electrode mixture slurry filling the negative electrode current collector was adjusted so that the porosity of the negative electrode became substantially the same as that in Example 1.

### «COMPARATIVE EXAMPLES 1 and 2»

Lithium ion capacitors B1 and B2 were prepared and evaluated as in Example 1 except that the thickness of the second separator was changed to 64 µm and 72 µm, respectively.

### «COMPARATIVE EXAMPLES 3 to 6»

A punched copper foil (thickness: 20 µm, aperture size: 50 µm, aperture ratio: 30%, 105 mm x 105 mm) was used as the negative electrode current collector. The negative electrode mixture slurry was applied to both surfaces of the negative electrode current collector to prepare a negative electrode having a thickness of 180 µm. Lithium ion capacitors B3 to B6 were prepared as in Example 1 except that this negative electrode was used and a second separator having a thickness shown in Table I was used.

### «COMPARATIVE EXAMPLE 7»

A punched copper foil (thickness: 20 µm, aperture size: 50 µm, aperture ratio: 30%, 105 mm x 105 mm) was used as the negative electrode current collector. The negative electrode mixture slurry was applied to both surfaces of the negative electrode current collector to prepare a negative electrode having a thickness of 240 µm. A lithium ion capacitor B7 was prepared as in Comparative Example 4 except that this negative electrode was used.

### [Evaluation method]

### (1) Internal short-circuit

Ten lithium ion capacitors were prepared for each sample. After completing pre-doping, charging was performed with a current of 2C, and the occurrence or nonoccurrence of an internal short-circuit was examined by measuring a voltage.

### (2) Pre-doping time

The time from the start of pre-doping until the cell voltage reached 2.8 V was measured.

### (3) Uniformity of doping

The cell was disassembled after completing pre-doping. A lithium content of a negative electrode (first negative electrode) that was the closest to the alkali metal supply source and a lithium content of an eleventh negative electrode were compared. A ratio (lithium content of eleventh negative electrode)/(lithium content of first negative electrode) is shown in Table I. The lithium contents were determined by inductively coupled plasma (ICP) mass spectrometry using a sample prepared by cutting from a substantially central portion of the negative electrode, the sample having a size of 1 cm².

**[Table I]**

| Lithium ion capacitor | Negative electrode thickness (µm) | Second separator thickness (µm) | internal short-circuit | Pre-doping time | Uniformity of doping |
|---|---|---|---|---|---|
| A1 | 180 | 8 | Not occur | 30.78 | 0.97 |
| A2 | 180 | 20 | Not occur | 32.48 | 0.95 |
| A3 | 180 | 32 | Not occur | 36.14 | 0.93 |
| A4 | 180 | 36 | Not occur | 37.28 | 0.92 |
| A5 | 180 | 40 | Not occur | 39.79 | 0.92 |
| A6 | 180 | 45 | Not occur | 41.31 | 0.91 |
| A7 | 180 | 55 | Not occur | 49.14 | 0.89 |
| A8 | 360 | 20 | Not occur | 41.24 | 0.91 |
| A9 | 360 | 40 | Not occur | 52.04 | 0.88 |
| A10 | 360 | 55 | Not occur | 62.5 | 0.86 |
| B1 | 180 | 64 | Not occur | 59.22 | 0.78 |
| B2 | 180 | 72 | Not occur | 71.59 | 0.74 |
| B3 | 180 | 8 | Occur | 31.24 | 0.91 |
| B4 | 180 | 20 | Occur | 34.01 | 0.89 |
| B5 | 180 | 40 | Not occur | 43.16 | 0.85 |
| B6 | 180 | 55 | Not occur | 53.92 | 0.82 |
| B7 | 240 | 20 | Occur | 44.9 | 0.85 |

The comparison of the lithium ion capacitors A1 to A7 with the lithium ion capacitors B1 and B2 shows that when the second separator has a thickness of 5 to 60 µm, doping can be performed uniformly in a short time. The comparison of the lithium ion capacitors A1 and A2 with the lithium ion capacitors B3 and B4 shows that even when the second separator has a small thickness, in the case where the negative electrode is formed of a three-dimensional mesh-like porous body, doping can be performed uniformly in a short time without causing an internal short-circuit. Furthermore, the results of the lithium ion capacitors A9 and A10 show that even when the negative electrode has a large thickness, doping is performed uniformly in a relatively short time because the negative electrode is formed of a three-dimensional mesh-like porous body. As shown by the results of the lithium ion capacitor B7, in the case where the negative electrode does not have a three-dimensional mesh-like porous structure, even when the negative electrode has a large thickness, an internal short-circuit occurs and the uniformity of doping also decreases.

### Industrial Applicability

According to the capacitor of the present invention, pre-doping can be performed uniformly in a short time, and generation of a dendrite is suppressed. Therefore, the capacitor of the present invention is applicable to various capacitors. Reference Signs List

1: separator, 2: positive electrode, 2c: positive electrode lead piece, 3: negative electrode, 3c: negative electrode lead piece, 4: alkali metal supply source, 4c: lead piece of alkali metal supply source, 7: nut, 8: flange, 9: washer, 10: case, 12: container body, 13: lid, 15: external negative electrode terminal, 16: safety valve, 100: capacitor, 101: void, 102: metal skeleton, 102a: cavity, 103: opening. 104: negative electrode mixture

## Claims

1. A capacitor comprising:
an electrode group that includes
a positive electrode including a positive electrode active material and a porous positive electrode current collector that holds the positive electrode active material,
a negative electrode including a negative electrode active material and a porous negative electrode current collector that holds the negative electrode active material, and
a first separator disposed between the positive electrode and the negative electrode;
a nonaqueous electrolyte having alkali metal ion conductivity;
a case that hermetically seals the electrode group and the nonaqueous electrolyte;
an alkali metal supply source disposed between the electrode group and the case; and
a second separator disposed between the electrode group and the alkali metal supply source,
wherein at least the negative electrode contains an alkali metal introduced by pre-doping using the alkali metal supply source,
the second separator has a thickness of 5 to 60 µm, and
the negative electrode current collector includes a first metal porous body having a three-dimensional mesh-like structure.

2. The capacitor according to Claim 1, wherein the negative electrode has a thickness of 50 to 600 µm.

3. The capacitor according to Claim 1 or 2, wherein the positive electrode current collector includes a second metal porous body having a three-dimensional mesh-like structure.

4. The capacitor according to any one of Claims 1 to 3, wherein the first separator has a porosity of 20% to 85%, and the second separator has a porosity of 20% to 85%.

5. The capacitor according to any one of Claims 1 to 4, wherein a ratio of a thickness of the first separator to a total thickness of a pair of the positive electrode and the negative electrode is 10% or less.

6. The capacitor according to any one of Claims 1 to 5, wherein, in a discharged state, the negative electrode has a potential of 0 to 1 V with respect to an oxidation-reduction potential of the alkali metal.

7. A method for producing a capacitor, comprising:
a step of preparing an electrode group that includes a positive electrode including a positive electrode active material and a porous positive electrode current collector that holds the positive electrode active material, a negative electrode including a negative electrode active material and a porous negative electrode current collector that holds the negative electrode active material, and a first separator disposed between the positive electrode and the negative electrode;
a step of preparing an alkali metal supply source that supports an alkali metal;
a step of housing the alkali metal supply source, the electrode group, and a second separator in a case so that the alkali metal supply source is disposed between the electrode group and the case and faces the electrode group with the second separator therebetween;
a step of electrically connecting the negative electrode to the alkali metal supply source;
a step of pre-doping at least the negative electrode with the alkali metal supported on the alkali metal supply source by pouring a nonaqueous electrolyte having alkali metal ion conductivity into the case; and
a step of hermetically sealing the case,
wherein the second separator has a thickness of 5 to 60 µm, and
the negative electrode current collector includes a first metal porous body having a three-dimensional mesh-like structure.

8. The method for producing a capacitor according to Claim 7, wherein the pre-doping is performed until a potential of the negative electrode reaches 0 to 1 V with respect to an oxidation-reduction potential of the alkali metal.
